# EUROPÄISCHE PATENTSCHRIFT

(11) **EP 0 857 864 B1**
(45) Veröffentlichungstag und Bekanntmachung des Hinweises auf die Patenterteilung: **29.08.2001**
(21) Anmeldenummer: 97116212.8
(22) Anmeldetag: 18.09.1997
(51) Int. Cl.: F02B 77/11, B60R 13/08, B32B 15/14

(54) **Hitzeschild**
Thermal shield
Ecran thermique

(30) Priorität: 06.02.1997 DE 19704436
(43) Veröffentlichungstag der Anmeldung: 12.08.1998
(73) Patentinhaber: Federal-Mogul Sealing Systems GmbH, 57562 Herdorf (DE)
(72) Erfinder: Krus, Ralf, 51789 Lindlar (DE)

(56) Entgegenhaltungen:
- EP-A- 0 303 068
- DE-B- 1 158 758
- US-A- 2 954 763
- US-A- 5 251 607
- PATENT ABSTRACTS OF JAPAN vol. 010, no. 246 (M-510), 23.August 1986 & JP 61 075019 A (YAMAHA MOTOR CO LTD), 17.April 1986,

## Beschreibung

Die Erfindung betrifft ein Hitzeschild zur Abschirmung des Auspuffkrümmers von Kraftfahrzeugen gemäß Anspruch 1, erster Teil.

Bei modernen Kraftfahrzeugen wird aufgrund einer immer weiteren Verbesserung des thermodynamischen Wirkungsgrades die Betriebstemperatur des Motors immer höher. Diese hohen Betriebstemperaturen bereiten bei der Konstruktion und beim Betreiben des Kraftfahrzeuges Schwierigkeiten. Um beispielsweise den Fahrgastraum nicht durch die hohen Abgastemperaturen der Abgasanlage aufzuheizen, ist eine ausgeklügelte Hitzeabführung im Motor erforderlich.
Ein gattungsgemäßes Hitzeschild zur Abschirmung des Auspuffkrümmers von Kraftfahrzeugen, welches aus einer metallischen Grundplatte mit abgebogenen randzonen besteht, ist aus dem Aufsatz vom M. Bleidt und W. Kullen: "Abschirmsysteme ― eine Lösung von Elring zur Hitzeabschirmung und Geräuschdämpfung" in MTZ 54 (1993) S. 280-283 bekannt. Dieses Hitzeschild ist zur Befestigung mit dem Rand der Auslaßkrümmerdichtung verbunden. Esist als Bauteil mit vorgegebener, unveränderbarer Form durch übliche Falt- Bördeltechnik sowie in spezieller Tiefziehtechnik hergestellt.

Da naturgemäß Wärmeführungsprobleme von Kraftfahrzeugtyp zu Kraftfahrzeugtyp, abhängig von vielen Faktoren, wie Leistung und Konstruktion des Motors, die Anordnung der Teile unter der Motorhaube, die Anfälligkeit der Teile gegenüber hohen Temperaturen bei der Luftführung unter der Motorhaube und so weiter, verschieden sind, variiert auch die optimale Form der Hitzschilder für eine optimale Abschirmwirkung von Modell zu Modell. Aus der DE OS 4 036 261 sind weitere Hitzschilder zu entnehmen. Ein solches Hitzeschild besteht aus einer aus Metallblech ausgestanzten Grundplatte, deren Seitenflächen unter Bildung einer Schale abgebogen ist. In diese Schale ist eine Isolierplatte aus einem Keramikfaservlies eingelegt, welches aus Keramikfaservliesmaterial deckungsgleich zur Grundplatte ausgestanzt ist. Auf diese Isolierplatte ist eine äußere Blechplatte gelegt, und zur Befestigung der Platten untereinander werden die aufgebogenen Seitenflächen der Grundplatte umgebogen.

Das so gebildete flache Zwischenprodukt wird dann mit einer, oder mehreren, mit Formwerkzeugen ausgerüsteten Prägepressen, mehrfach zur Erzielung der gewünschten Form umgebogen und mit Befestigungselementen versehen, über die dann das Hitzeschild im Motorraum besfestigt werden kann.

Zur Abschirmung zum Beispiel des Auspuffkrümmers bei Kraftfahrzeugen ist es wichtig, daß der Auspuffkrümmer nicht nur einseitig abgedeckt, sondern möglichst von allen Seiten , mindestens jedoch von drei Seiten, abgeschirmt ist. Das Problem, das sich dem Konstrukteur hierbei stellt, ist, daß durch die mehrseitige Abdeckung des Auspuffkrümmers der Zugang zu dem Befestigungsbereich des Auspuffkrümmers nicht mehr gegeben ist.

Der Erfindung liegt die Aufgabe zugrunde, ein gattungsgemäßes Hitzschild dahingehend zu verbessern, daß es relativ einfach montiert werden kann und gleichzeitig die Möglichkeit besteht, die abzuschirmenden Bauteile auch nach der Montage des Hitzeschilds ohne großen Arbeitsaufwand zugänglich zu halten.

Diese Aufgabe wird erfindungsgemäß durch die kennzeichnenden Merkmale des Patentanspruchs 1 gelöst. Vorteilhafte Ausgestaltungen der Erfindung sind in den Unteransprüchen dokumentiert. Durch die Anordnung eine Gelenks am Hitzschild ist es möglich, das Hitzschild, ohne es zu deformieren, aus der Abschirmebene herauszuklappen, um einen Freiraum zur Montage, zum Beispiel des Auspuffkrümmers, zu schaffen.

Ein besonderer Vorteil ergibt sich, wenn das Hitzeschild mit einem zweiten Bauteil, wie zum Beispiel mit der Auspuffkrümmerdichtung, bereits vor dem Einbau verbunden ist. Die zu einem Bauteil verbundenen Einzelteile können so gleichzeitig montiert werden, durch die Abklappmöglichkeit des Hitzeschilds sind sämtliche Befestigungsschrauben leicht zugänglich. Nach der Montage der Dichtung erfolgt dann das Einklappen des Hitzeschilds in die Funktionsstellung. Mit Hilfe von Arretierungsmitteln, in Form von federnden Klammern oder durch Schraubverbindungen, ist eine sichere Befestigung des Hitzeschilds gewährleistet.

Die Erfindung ist anhand eines Ausführungsbeispieles in der Zeichnung dargestellt und wird im folgenden näher erläutert. Es zeigen:
- Figur 1: perspektivische Ansicht eines Hitzeschilds mit einer Flachdichtung
- Figur 2: Seitenansicht des Hitzeschilds gemäß Figur 1

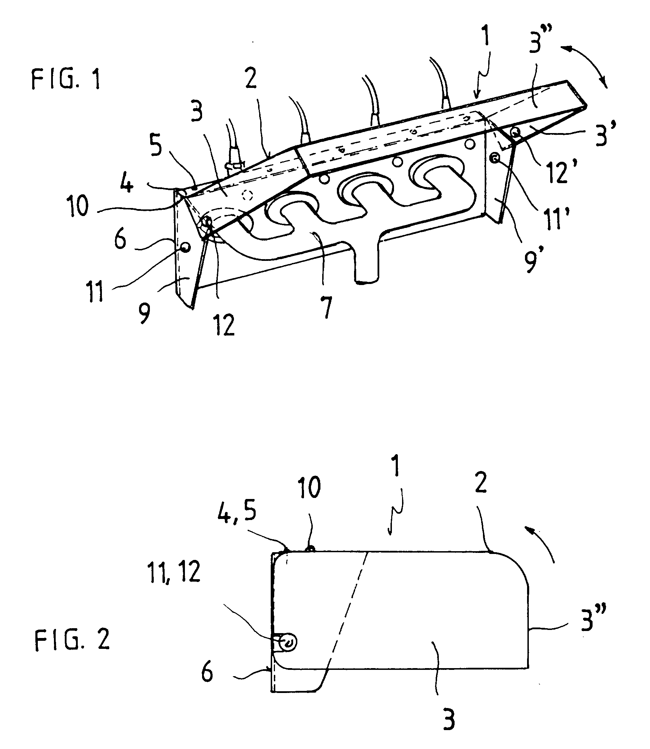

Das in der Figur 1 dargestellte Hitzeschild (1) besteht aus einer metallischen Grundplatte (2) mit abgebogenen Randzonen (3, 3', 3"). An einem Randbereich (4) des Hitzeschilds (1) sind Befestigungselemente (5) in Form von Nieten oder Schrauben vorgesehen, mit der das Hitzeschild im Motorraum, oder wie in der Figur 1 dargestellt, mit einer Flachdichtung (6), für die Abgasrohre (7) eines Kraftfahrzeuges verbunden ist.

Die Flachdichtung (6) weist einen aus der Dichtungsebene herausragenden Rand (9, 9') auf, der mit den Randzonen (3, 3') lösbar arretiert ist.

Wie in der Figur 2 dargestellt, erstreckt sich am Randbereich (4) des Hitzeschild (1) ein Gelenk (10) in Form einer Sicke (Knick-Sicke). Über die Sicke ist das Hitzeschild scharnierartig abklappbar.
Zum Einbau des Hitzeschilds (1) wird dieses zunächst mit der Flachdichtung (6) verbunden. Am Einbauort wird die Grundplatte (2) hochgeklappt, so daß die Dichtung und die Abgasanlage (7) montiert werden kann. Abschließend wird die Grundplatte (2) herunter in die Abschirmebene, das heißt, auf die Abgasrohre (7) geklappt. Am Rand (9, 9') der Flachdichtung (6) greifen federnde Klammern (11, 11') über Vorsprünge (12, 12') im Bereich der Randzonen (3, 3') des Hitzeschilds (1). Auf diese Weise ist das Hitzeschild in Funktionsstellung arretiert.
Denkbar wäre es auch, statt Klammern (11, 11') und Vorsprüngen (12), Schraubverbindungen zu verwenden.

## Patentansprüche

1. Hitzeschild an einem Motor zur Abschirmung des Auspuffkrümmers von Kraftfahrzeugen, bestehend aus einer metallischen Grundplatte mit abgebogenen Randzonen, sowie Elementen zur Befestigung des Hitzeschilds, wobei das Hitzeschild mit dem Rand einer Flachdichtung zur Abdichtung von Abgasrohren verbunden ist, **dadurch gekennzeichnet**, daß das Hitzeschild (1) ein Gelenk (10) aufweist, um zu ermöglichen, daß das Hitzeschild (1) am Einbauort unter Beibehaltung der Form in die Abschirmebene ein- und/oder ausklappbar ist.

2. Hitzeschild nach Anspruch 1, **dadurch gekennzeichnet**, daß die Befestigungselemente (5) an einem Randbereich (4) des Hitzeschilds (1) angeordnet sind und daß das Gelenk (10) entlang des Randbereichs (4) sich erstreckt.

3. Hitzeschild nach Anspruch 1 und 2, **dadurch gekennzeichnet**, daß die Grundplatte (2) eine Sicke aufweist, die als Gelenk (10) fungiert.

4. Hitzeschild nach Anspruch 3, **dadurch gekennzeichnet**, daß die Flachdichtung (6) aus einer oder mehreren zu einem Laminat verbundenen Metallblechplatten besteht.

5. Hitzeschild nach Anspruch 4, **dadurch gekennzeichnet**, daß eine Metallplatte der Flachdichtung (1) einen aus der Flachdichtunsebene herausragenden Rand (9,9') aufweist, der mit den Randzonen (3, 3') des Hitzeschildes (1) lösbar arretierbar ist.

6. Hitzeschild nach Anspruch 5, **dadurch gekennzeichnet**, daß als Arretierunselement federnde Klammern (11, 11') am Rand (9, 9') der Flachdichtung (1) vorgesehen sind, die mit Vorsprüngen (12, 12') im Bereich der Randzonen (3, 3') des Hitzeschildes (1) korrespondieren.

## Claims

1. Thermal shield on an engine to protect the exhaust manifold of automotive vehicles, comprising a metallic base plate with bent-over edge areas, and elements for securing the thermal shield, the thermal shield being connected to the edge of a gasket for sealing exhaust pipes, **characterised in that** the thermal shield (1) has a joint (10) in order to make it possible for the thermal shield (1) to be flapped in and/or out of the protection plane at the fitting location, preserving its shape.

2. Thermal shield according to claim 1, **characterised in that** the fastening elements (5) are disposed on an edge re gion (4) of the thermal shield (1) and in that the joint (10) extends along the edge region (4).

3. Thermal shield according to claims 1 and 2, **characterised in that** the base plate (2) has a bead which acts as a joint (10).

4. Thermal shield according to claim 3, **characterised in that** the gasket (6) comprises one or more sheet metal plates connected to form a laminate.

5. Thermal shield according to claim 4, **characterised in that** a metal plate of the gasket (1) has an edge (9, 9') protruding from the gasket plane and which can be locked in a detachable manner with the edge areas (3, 3') of the thermal shield (1).

6. Thermal shield according to claim 5, **characterised in that** resilient clamps (11, 11') are provided as the locking element on the edge (9, 9') of the gasket (1), which correspond with projections (12, 12') in the region of the edge areas (3, 3') of the thermal shield (1).

## Revendications

1. Ecran thermique sur un moteur pour protéger le tuyau d'échappement coudé de véhicules automobiles, comprenant une plaque de base métallique avec une zone de bords repliés ainsi que des éléments pour la fixation de l'écran thermique, l'écran thermique étant relié avec le bord d'une garniture d'étanchéité plate pour étanchéifier des tuyaux d'échappement, **caractérisé en ce que** l'écran thermique (1) comprend une articulation (10) afin de permettre que l'écran thermique (1) soit pivotant en position et hors de position à l'endroit où il est monté en maintenant la forme dans le plan de protection.

2. Ecran thermique selon la revendication 1, **caractérisé en ce que** les éléments de fixation (5) sont disposés sur une zone de bord (4) de l'écran thermique (1) et en ce que l'articulation (10) s'étend le long de la zone de bord (4).

3. Ecran thermique selon la revendication 1 ou 2, **caractérisé en ce que** la plaque de base (2) comprend une nervure qui fait fonction d'articulation (10).

4. Ecran thermique selon la revendication 3, **caractérisé en ce que** la garniture d'étanchéité plate (6) est constituée d'une ou de plusieurs plaques de tôles métalliques reliées pour former un laminé.

5. Ecran thermique selon la revendication 4, **caractérisé en ce qu**'une plaque métallique de la garniture d'étanchéité plate (1) comprend un bord (9, 9') qui fait saillie à partir du plan de la garniture d'étanchéité plate, ledit bord étant bloqué de manière amovible avec les zones de bord (3, 3') de l'écran thermique (1).

6. Ecran thermique selon la revendication 5, **caractérisé en ce qu**'il est prévu des crampons élastiques (11, 11') en tant qu'éléments de blocage situés sur le bord (9, 9') de la garniture d'étanchéité plate (1), lesdits crampons correspondant à des saillies (12, 12') dans la région des zones de bord (3, 3') de l'écran thermique (1).
